# EUROPEAN PATENT APPLICATION

(11) **EP 3 764 310 A1**
(43) Date of publication of application: **13.01.2021**
(21) Application number: 18908329.8
(22) Date of filing: 07.03.2018
(51) Int. Cl.: G06Q 40/02

(54) **PREDICTION TASK ASSISTANCE DEVICE AND PREDICTION TASK ASSISTANCE METHOD**

(71) Applicant: Hitachi, Ltd., Tokyo 100-8280 (JP)
(72) Inventor: OGAWA, Jun, Tokyo 100-8280 (JP); FUKATSU, Takao, Tokyo 100-8280 (JP); MOCHIZUKI, Kentarou, Tokyo 100-8280 (JP)
(74) Representative: MERH-IP Matias Erny Reichl Hoffmann Patentanwälte PartG mbB
(86) International application number: PCT/JP2018/008769
(87) International publication number: WO 2019/171492

(57) **Abstract**

An object is to improve accuracy and efficiency of future prediction associated with a predetermined task in a financial institution. The prediction task assistance apparatus 100 includes: a storage device 101 that stores a piece of information on a predetermined index value and pieces of information on predetermined events used in a financial institution; and a computation device 104 that reads the pieces of information on the index value and the events from the storage device, executes correlation analysis by using the read pieces of information as inputs, generates a regression formula used to estimate the index value based on the pieces of information on the event that gives a predetermined effect on the index value, generates a question screen including an interface that allows giving an answer to a selective type question on trend prediction of the event configuring a variable in the regression formula, distributes the question screen to terminals, obtains answers of the trend prediction via the question screen, inputs values of the answers into the variable of the event corresponding to the answers in the regression formula, calculates a prediction value of the index value, and outputs information on the prediction value to a predetermined device.

## Description

### [Technical Field]

The present invention relates to a prediction task assistance apparatus and a prediction task assistance method.

### [Background Art]

In a financial institution, there is a so-called ALM (Asset Liability Management) task. The ALM task is a task of predicting a predetermined event (for example, official discount rates, stock indices, and the like) based on a configuration of assets and liabilities such as an amount of deposits and loan interest rates in the financial institution to minimize various risks and maximize revenue based on a prediction result. Accordingly, a person in charge of the ALM task performs future prediction by referring to various economic indices and analyst reports.

As a conventional technique relating to such future prediction, for example, the following stock price prediction apparatus (see Patent Literature 1) and the like are proposed based on recognition of a challenge of providing a stock price prediction apparatus preferable as a tool that quantitatively predicts trends of a future business performance and a stock price of an individual company by starting from prediction values of major macroeconomic indices of one nation, that is from prediction of trends of the entire economy. The proposed stock price prediction apparatus includes: macroeconomic index calculating means that calculates future macroeconomic indices of one nation based on major macroeconomic exogenous indices assumed by a user of the apparatus; individual company management index calculating means that calculates future management indices of an individual company based on the calculated future macroeconomic indices; and individual company stock price calculating means that calculates a future stock price of the individual company based on the calculated future management indices and the future macroeconomic indices.

### [Citation List]

### [Patent Literature]

[PTL 1] Japanese Patent Application Publication No. Hei 10-3465

### [Summary of Invention]

### [Technical Problem]

The future prediction has problems due to dependence on individual skills such as variation in accuracy depending on skill and experience of an individual person in charge in the financial institution. Meanwhile, from the viewpoint of the person in charge, burden of this task is not small and a demand for improving both of task efficiency and accuracy tends to emerge. Moreover, financial institutions tends to be curious about behaviors of the other institutions relating to future prediction but there is no system that allows each financial institution to obtain corresponding information and make effective use of it for its own task.

An object of the present invention is to provide a technique that improves accuracy and efficiency of future prediction associated with a predetermined task in a financial institution.

### [Solution to Problem]

A prediction task assistance apparatus of the present invention that solves the aforementioned problems includes: a storage device that stores a piece of information on a predetermined index value and pieces of information on predetermined events used in a financial institution; and a computation device that performs processing of reading the pieces information on the index value and the events from the storage device, executing correlation analysis between the piece of information on the index value and the pieces of information on the events by using the read pieces of information as inputs, determining the event that gives a predetermined effect on the index value, and generating a regression formula used to estimate the index value based on the pieces of information on the determined event, processing of generating a question screen including an interface that allows giving an answer to a selective type question on trend prediction of the event configuring a variable in the regression formula, processing of distributing the question screen to terminals of a predetermined financial institution, obtaining answers of the trend prediction from the terminals via the question screen, inputting values of the answers into the variable of the event corresponding to the answers in the regression formula, and calculating a prediction value of the index value, and processing of outputting information on the prediction value to a predetermined device of the predetermined financial institution.

Moreover, a prediction task assistance method of the present invention includes causing an information processing apparatus, including a storage device that stores a piece of information on a predetermined index value and pieces of information on predetermined events used in a financial institution, to perform: processing of reading the pieces information on the index value and the events from the storage device, executing correlation analysis between the piece of information on the index value and the pieces of information on the events by using the read pieces of information as inputs, determining the event that gives a predetermined effect on the index value, and generating a regression formula used to estimate the index value based on the pieces of information on the determined event, processing of generating a question screen including an interface that allows giving an answer to a selective type question on trend prediction of the event configuring a variable in the regression formula, processing of distributing the question screen to terminals of a predetermined financial institution, obtaining answers of the trend prediction from the terminals via the question screen, inputting values of the answers into the variable of the event corresponding to the answers in the regression formula, and calculating a prediction value of the index value, and processing of outputting information on the prediction value to a predetermined device of the predetermined financial institution.

### [Advantageous Effects of Invention]

The present invention can improve accuracy and efficiency of future prediction associated with a predetermined task in a financial institution.

### [Brief Description of Drawings]

[Fig. 1] Fig. 1 is a diagram of a network configuration including a prediction task assistance apparatus in an embodiment.

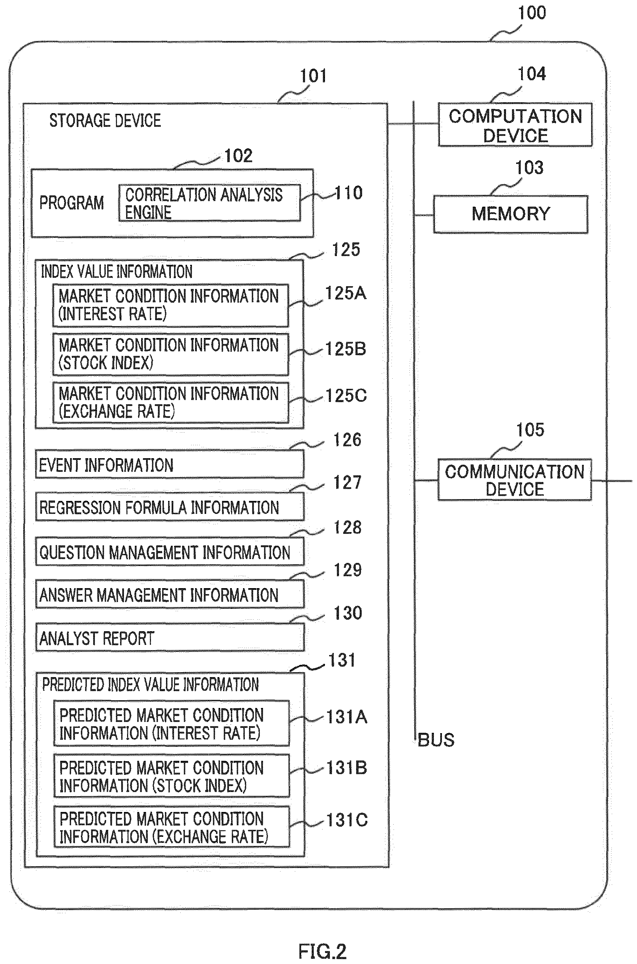

[Fig. 2] Fig. 2 is a diagram illustrating a hardware configuration example of the prediction task assistance apparatus in the embodiment.
[Fig. 3A] Fig. 3A is a diagram illustrating a configuration example of market condition information (interest rate) in the embodiment.
[Fig. 3B] Fig. 3B is a diagram illustrating a configuration example of market condition information (stock index) in the embodiment.
[Fig. 3C] Fig. 3C is a diagram illustrating a configuration example of market condition information (exchange rate) in the embodiment.
[Fig. 4] Fig. 4 is a diagram illustrating a configuration example of event information in the embodiment.
[Fig. 5] Fig. 5 is a diagram illustrating a configuration example of regression formula information in the embodiment.
[Fig. 6A] Fig. 6A is a diagram illustrating a configuration example of question management information in the embodiment.
[Fig. 6B] Fig. 6B is a diagram illustrating a configuration example of question management information in the embodiment.
[Fig. 7] Fig. 7 is a diagram illustrating a configuration example of an analyst report in the embodiment.
[Fig. 8] Fig. 8 is a flowchart illustrating a processing step example 1 of a prediction task assistance method in the embodiment.
[Fig. 9] Fig. 9 is a diagram illustrating a configuration example of range information in the embodiment.
[Fig. 10] Fig. 10 is a view illustrating a screen example 1 in the embodiment.
[Fig. 11A] Fig. 11A is a diagram illustrating a configuration example of predicted market condition information (interest rate) in the embodiment.
[Fig. 11B] Fig. 11B is a diagram illustrating a configuration example of predicted market condition information (stock index) in the embodiment.
[Fig. 11C] Fig. 11C is a diagram illustrating a configuration example of predicted market condition information (exchange rate) in the embodiment.
[Fig. 12] Fig. 12 is a view illustrating a screen example 2 in the embodiment.
[Fig. 13] Fig. 13 is a view illustrating a screen example 3 in the embodiment.
[Fig. 14] Fig. 14 is a view illustrating a screen example 4 in the embodiment.
[Fig. 15] Fig. 15 is a flowchart illustrating a processing step example 2 of the prediction task assistance method in the embodiment.
[Fig. 16] Fig. 16 is a diagram illustrating a concept example of a histogram in the embodiment.
[Fig. 17] Fig. 17 is a flowchart illustrating a processing step example 3 of the prediction task assistance method in the embodiment.

### [Description of Embodiments]

### [Network Configuration]

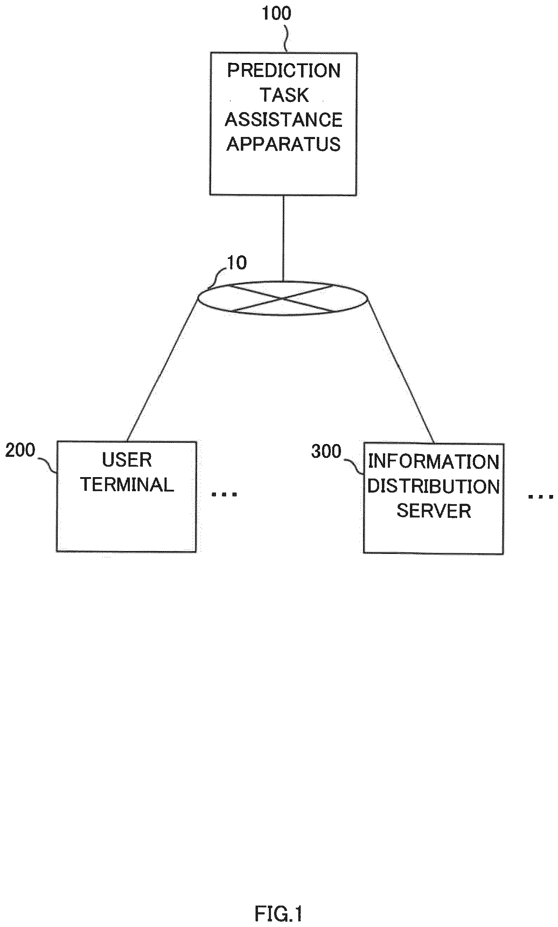

An embodiment of the present invention is described below in detail by using the drawings. Fig. 1 is a diagram illustrating a network configuration example including a prediction task assistance apparatus 100 of the embodiment. The prediction task assistance apparatus 100 illustrated in Fig. 1 is an information processing apparatus that improves accuracy and efficiency of future prediction associated with predetermined tasks in financial institutions.

The prediction task assistance apparatus 100 as described above is connected to a network 10 and is capable of performing data communication with a user terminal 200 and an information distribution server 300.

Among these devices, the user terminal 200 is a terminal that is operated by a person in charge in the financial institution. The person in charge is a person in charge of an ALM task and is a person who uses services provided by the prediction task assistance apparatus 100 of the embodiment to improve efficiency and accuracy of his/her task.

The information distribution server 300 is a server that distributes economic information such as official discount rates, stock indices, and exchange rates, news information on politics such as political changes and economic policies, and similar information. For example, a company that provides a service of distributing economic information is assumable to operate the information distribution server 300.

### ---Hardware Configuration Example---

A hardware configuration of the prediction task assistance apparatus 100 is as follows. The prediction task assistance apparatus 100 includes at least a storage device 101 formed of an appropriate non-volatile storage element such as a hard disk drive, a memory 103 formed of a volatile storage element such as a RAM, a CPU 104 (computation device) that integrally controls the system by, for example, loading a program 102 held in the storage device 101 onto the memory 103 and that performs various types of determination, calculation, and control processing, and a communication device 105 that is connected to the network 10 and performs communication processing with the other devices.

Moreover, the program 102 that implements functions associated with a prediction task assistance method of the embodiment is stored in the aforementioned storage device 101. The program 102 includes a correlation analysis engine 110. The correlation analysis engine 110 is a program that performs correlation analysis and an existing program can be used as appropriate. Note that, instead of the correlation analysis engine 110 described above, for example, an artificial intelligence that provides similar functions may be employed and the configuration that performs the correlation analysis is not limited to a particular configuration.

Moreover, index value information 125, event information 126, regression formula information 127, question management information 128, answer management information 129, an analyst report 130, and predicted index value information 131 are stored in the storage device 101 in addition to the aforementioned program 102. Details of these pieces of information are described later.

### ---Data Configuration Example---

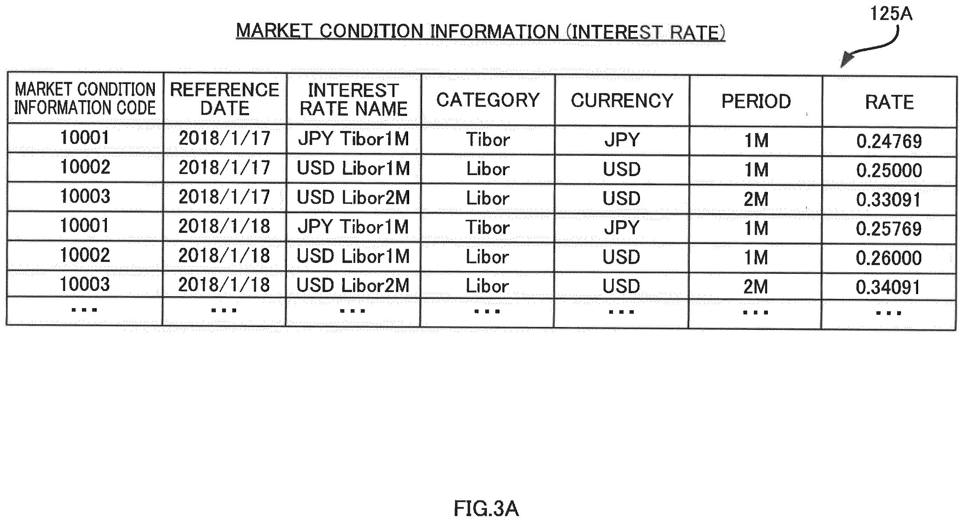

Next, databases used by the prediction task assistance apparatus 100 of the embodiment are described. Figs. 3A to 3C illustrate examples of market condition information (interest rate) 125A, market condition information (stock index) 125B, and market condition information (exchange rate) 125C that are the index value information 125 in the embodiment. Note that the values forming the index value information 125 are assumable to be values received from the information distribution server 300 by the prediction task assistance apparatus 100 and stored therein.

Among these pieces of information, the market condition information (interest rate) 125A illustrated in Fig. 3A is a table storing actual values of interest rates that are a kind of economic index in chronological order.

The data structure of the market condition information (interest rate) 125A is a collection of records that each use a market condition information code as a key and that are each formed of pieces of data such as reference date, interest rate name, category, currency, period, and rate.

Among these pieces of data, the market condition information code is an ID that uniquely specifies the type of the interest rate in each record. The reference date is a value indicating effective date of the interest rate. The interest rate name and the category are values indicating the name and the category of the interest rate. The currency is a value indicating the currency to which the interest rate applies. The period is a value indicating a period to maturity of the interest rate. The rate is a value indicating a value of the interest rate.

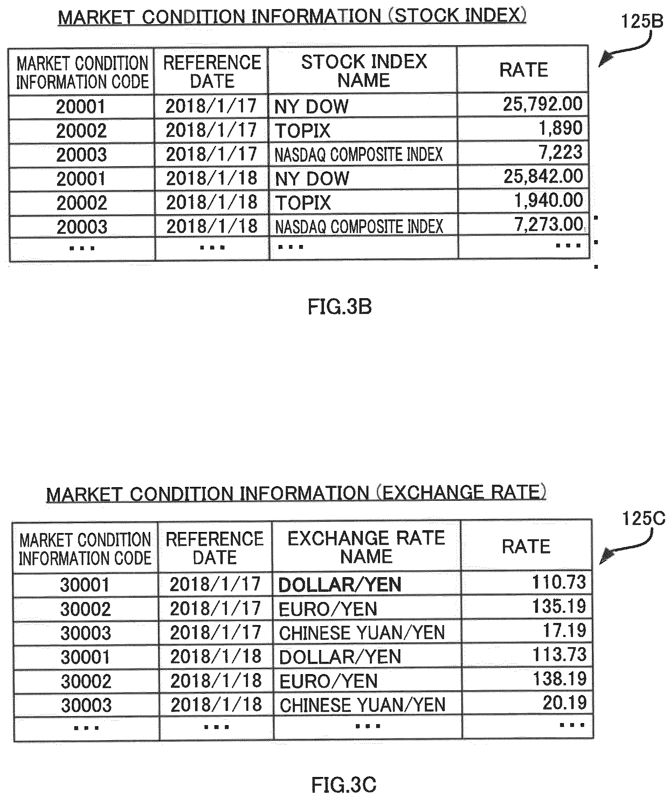

The market condition information (stock index) 125B illustrated in Fig. 3B is a table storing actual values of stock indices that are a kind of economic index in chronological order.

The data structure of the market condition information (stock index) 125B is a collection of records that each use the market condition information code as a key and that are each formed of pieces of data such as reference date, stock index name, and rate.

Among these pieces of data, the market condition information code is an ID that uniquely specifies the type of the stock index in each record. The reference date is a value indicating calculation date of the stock index. The stock index name is a value indicating the name of the stock index. The rate is a value indicating a value of the stock index.

The market condition information (exchange rate) 125C illustrated in Fig. 3C is a table storing actual values of exchange rates that are a kind of economic index in chronological order.

The data structure of the market condition information (exchange rate) 125C is a collection of records that each use the market condition information code as a key and that are each formed of pieces of data such as reference date, exchange rate name, and rate.

Among these pieces of data, the market condition information code is an ID that uniquely specifies the type of the exchange rate in each record. The reference date is a value indicating effective date of the exchange rate. The exchange rate name is a value indicating the name of the exchange rate. The rate is a value indicating a value of the exchange rate.

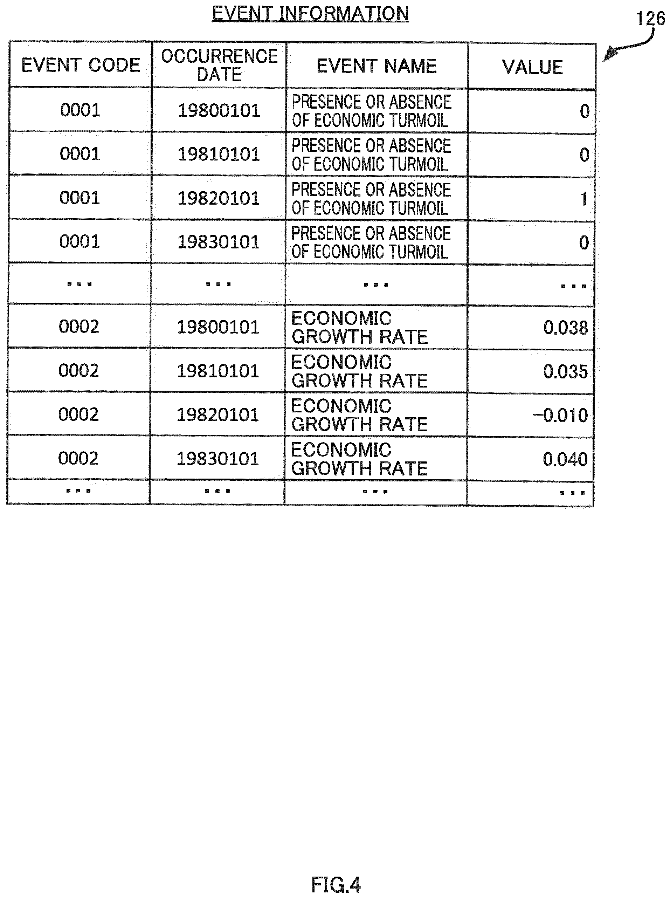

Next, Fig. 4 illustrates an example of the event information 126 in the embodiment. The event information 126 is a table storing information on events relating to economy in chronological order. The values forming the event information 126 are assumable to be values received from the information distribution server 300 by the prediction task assistance apparatus 100 and stored therein.

The data structure of the event information 126 is a collection of records that each use an event code uniquely identifying an event as a key and that are each formed of pieces of data such as occurrence date of the event, event name, and value.

Among these pieces of data, the occurrence date is a value indicating the time of occurrence of the event in each record. The event name is a value indicating the name of the event. The value is a value indicating a value of the event. For example, when the corresponding event is "presence or absence of economic turmoil", the value is set to "0" if the economic turmoil is absent and is set to "1" if the economic turmoil is present. Meanwhile, when the corresponding event is "(announcement of) economic growth rate", the value is set to a value of the economic growth rate announced by a government agency.

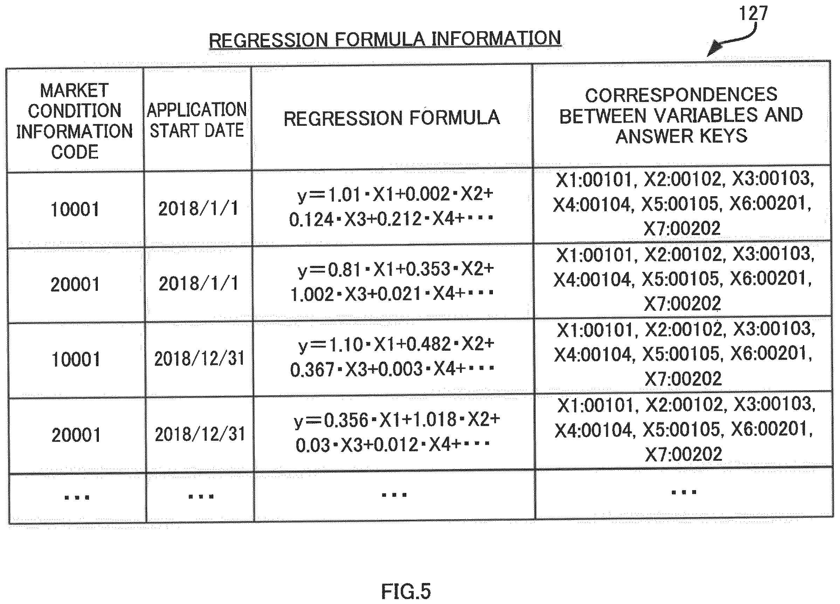

Next, Fig. 5 illustrates an example of the regression formula information 127 in the embodiment. The regression formula information 127 is a table storing regression formulae obtained in analysis performed by the correlation analysis engine 110 by using the aforementioned index value information 125 and event information 126 as inputs.

The data structure of the regression formula information 127 is a collection of records that each use the market condition information code corresponding to a market condition information (index value) being a calculation result of the regression formula as a key and that are each formed of pieces data such as application start date of the regression formula, regression formula, and correspondences between variables in the regression formula and answer keys.

Among these pieces of data, the application start data is a value indicating a target period of the index value that is the market condition information to be estimated by using the regression formula. The regression formula is a formula whose output y is a value of market condition information (for example, value of interest rate) indicated by the market condition information code in each record and which is formed of a combination of variables X and coefficients of the variables X for calculating this market condition information. For example, the regression formula is assumable to be a formula such as y=1.01·X1 + 0.002·X2 + 0.124·X3 +....

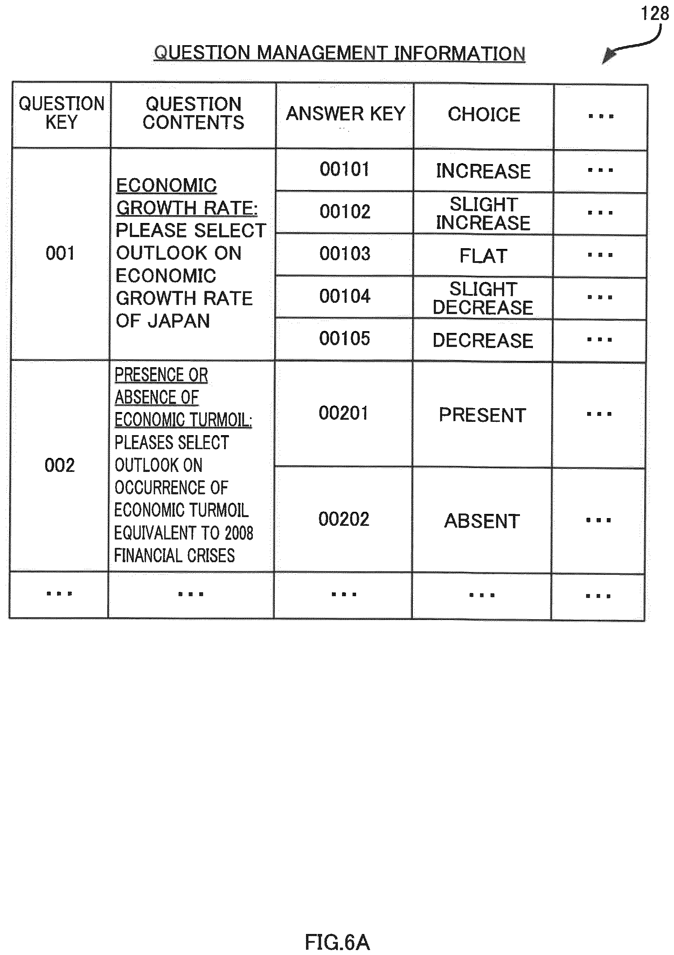

The variables X1, X2, ... X7 are variables corresponding to the predetermined events in the event information 126 and are provided respectively for types of answers to questions relating to the events (respectively for "choices" of "question contents" illustrated in the question management information 128 of Fig. 6A). Specifically, in the aforementioned regression formula, for example, the variable "X1" is for "economic growth rate (increase)", the variable "X2" is for "economic growth rate (slight increase)", the variable "X3" is for "economic growth rate (flat)", the variable "X4" is for "economic growth rate (slight decrease)", the variable "X5" is for "economic growth rate (decrease)", the variable "X6" is for "presence of absence of economic turmoil (present)", and the variable "X7" is for " presence of absence of economic turmoil (absent)".

Moreover, regarding the correspondence to the "answer key", the variable "X1" corresponds to "00101", the variable "X2" corresponds to "00102", the variable "X3" corresponds to "00103", the variable "X4" corresponds to "00104", the variable "X5" corresponds to "00105", the variable "X6" corresponds to "00201", and the variable "X7" corresponds to "00202". This correspondence relationship is specified in the "field for correspondence between variables and answer keys" in the regression formula information 127.

Accordingly, the contents answered by the person in charge in the financial institution to the questions to be described later, that is the answer keys stored in the field "answer number" in the answer management information 129 each correspond to one of the variables described above.

Moreover, a value substituted into each of these variables depends on presence or absence of the answer relating to "choice" of "question contents" corresponding to the variable. The value of the variable corresponding to the choice of the question contents which is given as the answer, that is the answer key for which is included in the "answer number" field in the answer management information 129 is "1" and the value of the variable corresponding to the choice of the question contents which is not given as the answer is "0".

For example, assume that the "answer number" field in a certain record of the answer management information 129 includes answer keys of "00101" and "00201". In this case, the prediction task assistance apparatus 100 substitutes "1" into the variable X1 corresponding to the answer key "000101", substitutes "1" into the variable X6 corresponding to the answer key "000201", and substitutes "0" into the other variables "X2" to "X5" and "X7" (this is because there is only one answer to each question).

Moreover, the coefficient multiplying each variable in the regression formula relating to the aforementioned economic growth rate is a coefficient value calculated by a predetermined artificial intelligence by using a change in the actual economic growth rate to this moment and a range assigned to each answer key (that is each variable) as inputs. As a matter of course, the method of determining the coefficient is not limited to this and the coefficient only needs to be appropriately determined by using an existing technique. Note that the aforementioned artificial intelligence is assumable to be included in the prediction task assistance apparatus 100 of the embodiment to be usable by it. Alternatively, the prediction task assistance apparatus 100 is assumable to use an artificial intelligence analysis service that is provided in the network 10.

Next, Fig. 6A illustrates an example of the question management information 128 in the embodiment. The question management information 128 is a table storing information on questions, given to the person in charge in the financial institution or the like, about trend prediction of the events corresponding to the variables included in the regression formulae in the aforementioned regression formula information 127.

The data structure of the question management information 128 is a collection of records that each use a question key uniquely identifying the question as a key and that are each formed of pieces of data such as question contents of the question, answer key, and choice.

Among these pieces of data, the question contents are a value indicating the contents of question to be given to the person in charge. The answer key is a key that uniquely identifies one of the types of the contents of answers given by the person in charge to the question. Furthermore, the choice indicates a choice that can be selected by the person in charge and is uniquely linked to the aforementioned answer key.

For example, choices of "increase" with the answer key of "00101", "slight increase" with the answer key of "00102", "flat" with the answer key of "00103", "slight decrease" with the answer key of "00104", and "decrease" with the answer key of "00105" are linked as answers to the question contents of "please select outlook on economic growth rate of Japan" with the question key of "001".

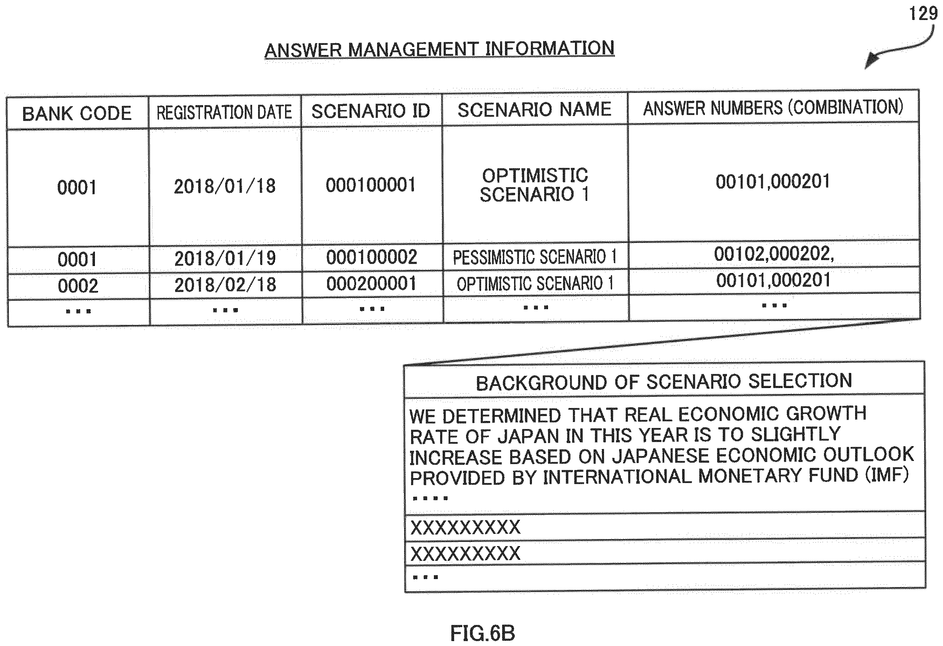

Next, Fig. 6B illustrates an example of the answer management information 129 in the embodiment. The answer management information 129 is a table storing contents of answers, given by the person in charge in the financial institution, to the questions managed in the aforementioned question management information 128.

The data structure of the answer management information 129 is a collection of records that each use a bank code uniquely identifying the financial institution having given the answer as a key and that are each formed of pieces of data such as registration date of the answer given by the person in charge in the financial institution, ID of a selected scenario, name of the scenario, answer number, and background of scenario selection.

Among these pieces of data, the scenario ID is an ID for uniquely identifying answer information inputted by a user by using a set of the bank code and a serial number or the like. The answer number is information formed of the answer keys of the choices selected by the person in charge from the choices defined in the aforementioned question management information 128. The background of scenario selection is a field storing information in which the person in charge describes information used as the grounds of selection of the scenario.

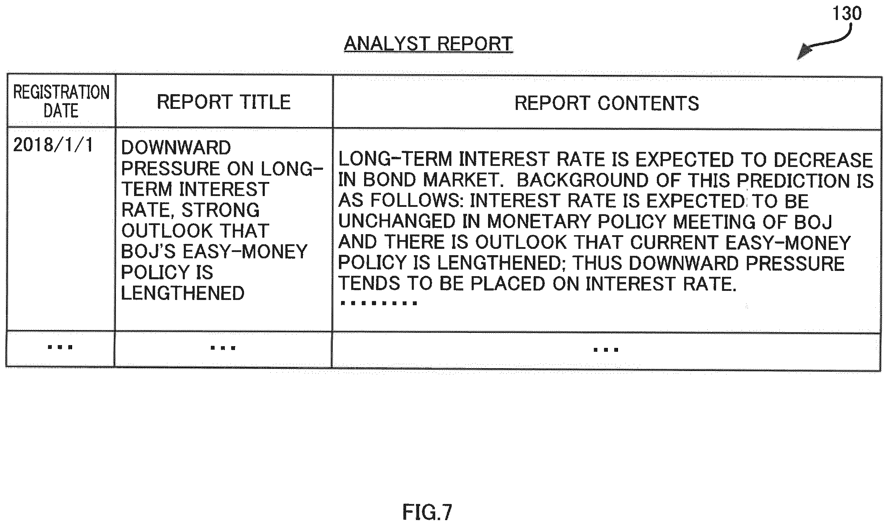

Next, Fig. 7 illustrates an example of the analyst report 130 in the embodiment. The analyst report 130 is a table storing analyst reports created by predetermined financial analysts. The analyst reports stored in the analyst report 130 are reports provided in advance from a predetermined financial institution.

The data structure of the analyst report 130 is a collection of records that each uses a registration date of the analyst report in this record as a key and that are each formed of pieces of data such as title and report contents of the analyst report. Among these pieces of data, the report title is the title of the analyst report and the report contents are the contents of the analyst report.

### ---Flow Example 1---

Actual steps in a prediction task assistance method of the embodiment are described below based on the drawings. Various operations corresponding to the prediction task assistance method described below are implemented by programs that are loaded on the memory 103 and executed by the prediction task assistance apparatus 100. These programs are formed of codes for performing the various operations described below.

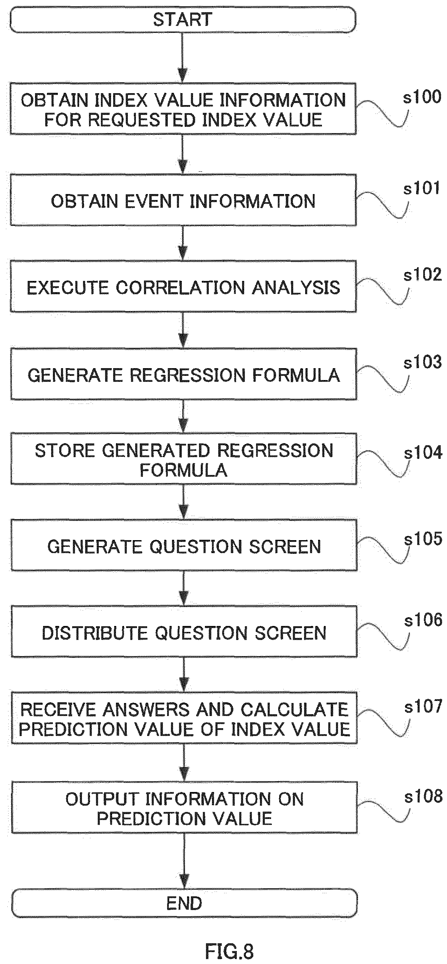

Fig. 8 is a flowchart illustrating a processing step example 1 of the prediction task assistance method in the embodiment. In this example, it is assumed that, for example, the prediction task assistance apparatus 100 has received a prediction value request notification for a predetermined index value from the user terminal 200 of a certain financial institution, before the execution of the flow.

The prediction task assistance apparatus 100 obtains information on the index value requested in the aforementioned notification (hereinafter, requested index value), from the index value information 125 of the storage device 101 (s100). When the requested index value is "interest rate", the information extracted from the index value information 125 is the market condition information (interest rate) 125A.

Then, the prediction task assistance apparatus 100 accesses the storage device 101 and obtains the event information 126 (s101). Note that the prediction task assistance apparatus 100 may obtain index values other than the requested index value, that is the market condition information (stock index) 125B and the market condition information (exchange rate) 125C in the index value information 125, in addition to the event information 126. This is because not only the events indicated by the event information 126 but also the other index values are assumable as events that affect the requested index value.

Next, the prediction task assistance apparatus 100 gives the pieces of information obtained in the aforementioned steps s100 and s101 to the correlation analysis engine 110 as inputs and executes the correlation analysis between the requested index value and the obtained events and other index values (s102). This correlation analysis is similar to existing analysis.

Moreover, the prediction task assistance apparatus 100 determines the events and the other index values that give a predetermined effect to the requested index value by means of the aforementioned correlation analysis and generates a regression formula for estimating the requested index value based on the information on the determined events and the like (s103). This regression formula is assumed to be a linear formula in which the values of the event information 126 and the other index values are variables X1 to Xn when the requested index value is "y". An existing method can be appropriately employed as a method of generating the regression formula in this case.

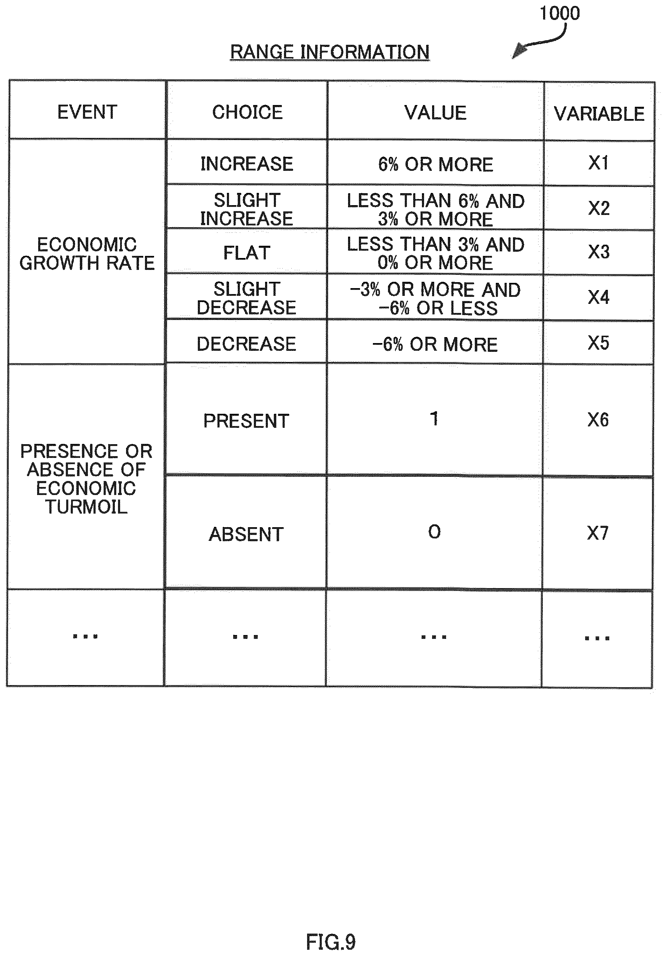

In the aforementioned generation of the regression formula, the prediction task assistance apparatus 100 categorizes, for example, the values of the event information 126 among the "interest rate" of the requested index value and the values of the event information 126 that are inputs of the algorism for the generation of the regression formula of the artificial intelligence or the like, depending on concepts of the respective variables X1 to X7 described above, that is the respective choices for the questions. For this purpose, the prediction task assistance apparatus 100 holds range information 1000 (Fig. 9) in the storage device 101.

In the example of the range information 1000 illustrated in Fig. 9, values of the economic growth rate corresponding to the respective variables X1 to X5, specifically the respective events of "increase", "slight increase", ... of the "economic growth rate" are defined as follows: for example, the value is "6% or more" for the economic growth rate "increase", the value is "less than 6% and 3% or more" for "slight increase", the value is "less than 3% and 0% or more" for "flat", the value is "-3% or more and less than -6%" for the economic growth rate "slight decrease", and the value is "-6% or more" for "decrease".

Similarly, in the range information 1000, values corresponding to the variables X6 and X7, specifically the respective events of "present" and "absent" of "presence or absence of economic turmoil" are defined as follows: for example, the value for "present" is "1" and the value for "absent" is "0".

Accordingly, in the generation of the aforementioned regression formula, the prediction task assistance apparatus 100 compares, for example, each of the values of "economic growth rate" being the event information 126 to be processed with the aforementioned range information 1000 and determines which one of "increase", "slight increase", "flat", and "decrease" the value corresponds to.

For example, when the economic growth rate "0.038", that is "3.8%" at the occurrence date of "19800101" is compared with the definitions of "economic growth rate" in the range information 1000, the prediction task assistance apparatus 100 can determine that this rate is the economic growth rate "slight increase" because the rate is within the range of "less than 6% and 3% or more".

The prediction task assistance apparatus 100 generates the regression formula by giving the artificial intelligence the values of the economic growth rate being the event information 126 (each being one of "increase", "slight increase" ... in this example) obtained through the aforementioned determination, the values of presence or absence of economic turmoil (requiring no determination described above), and the requested index values in the respective corresponding years, that is the rates in the "interest rate" (for example, interest rate name "JPY Tibor1M" of "market information code "10001") and determining a combination of variables and coefficients in the regression formula.

The prediction task assistance apparatus 100 stores the regression formula generated in s103 in the regression formula information 127 (s104).

Next, the prediction task assistance apparatus 100 generates a question screen including an interface that allows giving answers to selective type questions on trend prediction of the events and the other index values configuring the variables in the regression formula generated and stored in the aforementioned steps s103 and s104 (s105).

For example, assume that the regression formula is a formula for the requested index value "interest rate" and the variables are "economic growth rate" and "presence or absence of economic turmoil". In this case, the prediction task assistance apparatus 100 generates the question screen by setting a pull-down menu that causes the user to answer a question on trend prediction of "economic growth rate" from choices and a pull-down menu that causes the user to answer a question on trend prediction of "presence or absence of economic turmoil" from choices, in a predetermined screen format held in the storage device 101 in advance.

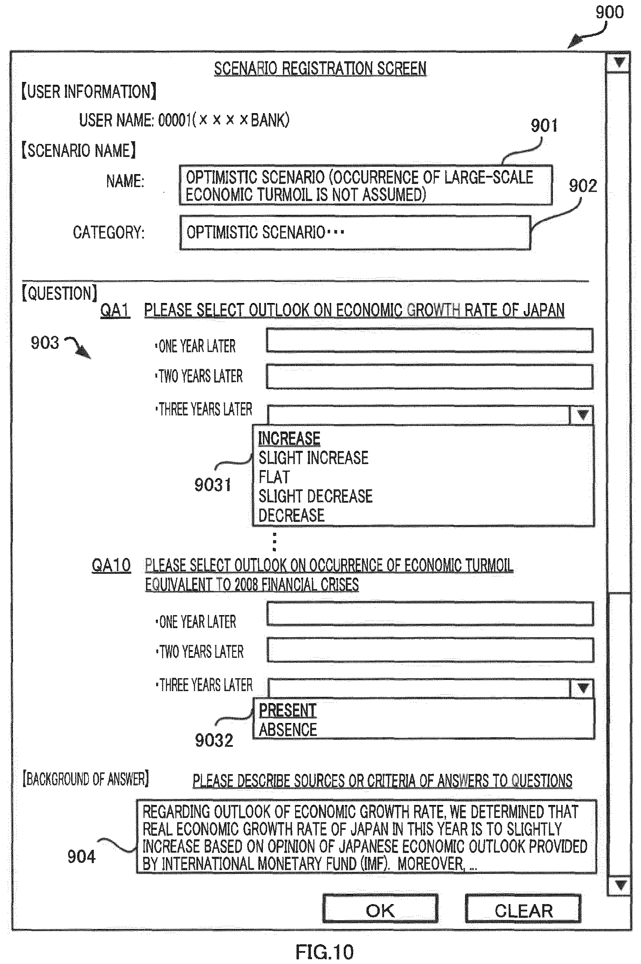

Fig. 10 illustrates a specific example of the question screen 900 in the embodiment. The question screen 900 is referred to as "scenario registration screen" for convenience. In this example, the question screen 900 includes an input interface that requests the person in charge in the financial institution to answer items of a name of scenario 901, a category 902, a question 903, and an answer background 904.

Among these items, the name of scenario 901 is a field in which the person in charge freely inputs the name indicating an economic condition in an estimation target period of the requested index value. The category 902 is a free description field in which the person in charge freely inputs description on an economic condition such as an optimistic scenario or a pessimistic scenario. The optimistic scenario is assumed to be an economic condition with no large-scale economic turmoil and the pessimistic scenario is assumed to be an economic condition with large-scale economic turmoil.

The question 903 includes pull-down menus 9031 each including choices of increase, slight increase, flat, slight decrease, and decrease for prediction of trends of the variable "economic growth rate" among the trends of the events and the other index values configuring the variables in the regression formula and pull-down menus 9032 each including choices of present and absent for trend prediction of the variable "presence or absence of economic turmoil".

The answer background 904 is an input field in which the person in charge freely inputs description on the background of the answers selected in the aforementioned input interfaces.

Next, the prediction task assistance apparatus 100 distributes the aforementioned question screen 900 to the user terminals 200 of the financial institution having made a predetermined agreement (s106).

Each user terminal 200 of the financial institution displays the question screen 900, obtains the answers made by the person in charge of the ALM task, the financial analyst, or the like in the interfaces of the name of scenario 901, the category 902, and the question 903 presented by the question screen 900, and sends back these answers to the prediction task assistance apparatus 100 as answers of trend prediction.

For example, values such as "optimistic scenario (no occurrence of large-scale economic turmoil is assumed)" as the name of scenario 901, "optimistic scenario" as the category 902, "increase" and "present" as the answers to "QA1" and "QA2" in the question 903, and "regarding the outlook of the economic growth rate, we determined that the real economic growth rate of Japan in this year is to slightly increase based on an opinion of Japanese economic outlook provided by International Monetary Fund (IMF). Moreover, ..." as the answer background 904 are assumed to be sent back from the user terminal 200 to the prediction task assistance apparatus 100.

In this case, the prediction task assistance apparatus 100 receives the aforementioned values of answers from the user terminal 200, inputs the values into the variables of the corresponding events and index values in the regression formula generated in s103, and calculates a prediction value of the index value (s107).

In this case, for example, when the regression formula used herein is interest rate y = 1.01 × X1 + 0.002 × X2 + 0.124 × X3 + 0.212 × X4 + 0.001 × X5 + 0.212 × X6 + 0.001 × X7 and the prediction task assistance apparatus 100 obtains "increase", specifically the answer key "00101" as the answer of "economic growth rate" (specifically, the variable X1 is "1") and "present", specifically the answer key "00201" as the answer of "presence or absence of economic turmoil" (specifically, the variable X6 is "1"), the prediction task assistance apparatus 100 can calculate such that interest rate y = 1.01 × 1 + 0.212 × 1 = 1.222.

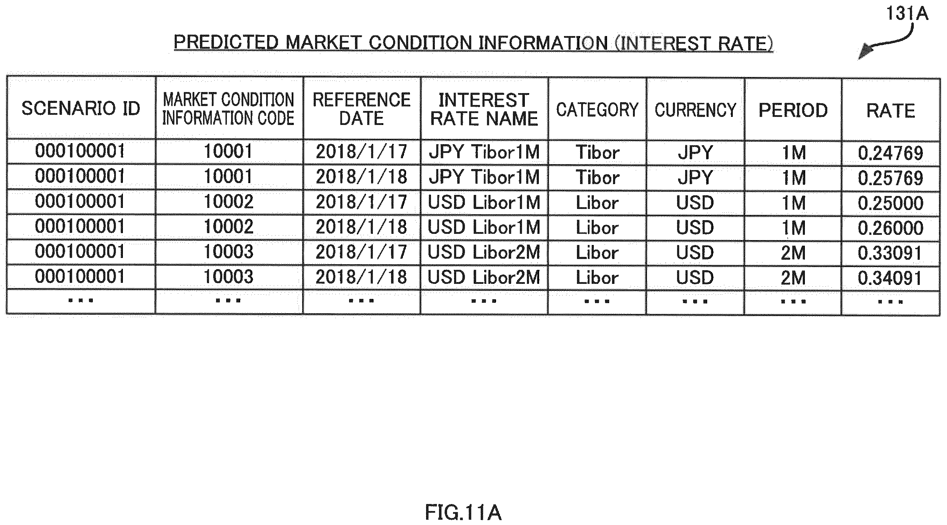

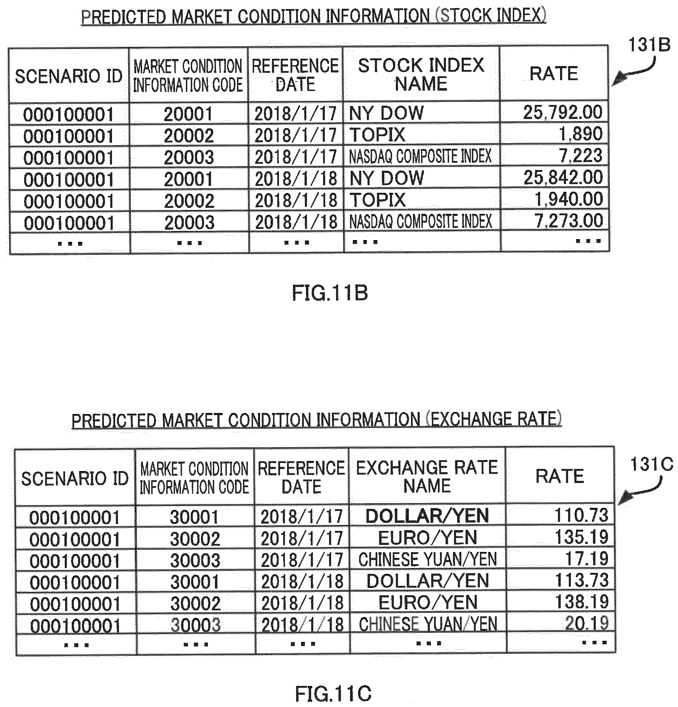

The prediction task assistance apparatus 100 having calculated the prediction value of the requested index value as described above stores this information in the answer management information 129 in association with the scenario. Moreover, the prediction task assistance apparatus 100 stores a value indicating this information in a rate field in the predicted index value information 131. Figs. 11A to 11C illustrate predicted market condition information (interest rate) 131A, predicted market condition information (stock index) 131B, and predicted market condition information (exchange rate) 131C that are examples of the predicted index value information 131.

As illustrated in Figs. 11A to 11C, the predicted index value information 131 is a collection of records (each being one answer) that each use the market condition information code corresponding to the requested index value as a key and that are each formed of the same items as those in the index value information 125 such as the reference date, the name, and the rate.

Next, the prediction task assistance apparatus 100 outputs information on the prediction value calculated in s107 described above to the user terminal 200 having made a request (or of the predetermined financial institution) (s108) and terminates the processing.

Note that, in this output, the prediction task assistance apparatus 100 may receive condition specification from the user terminal 200 and output information corresponding to this specification.

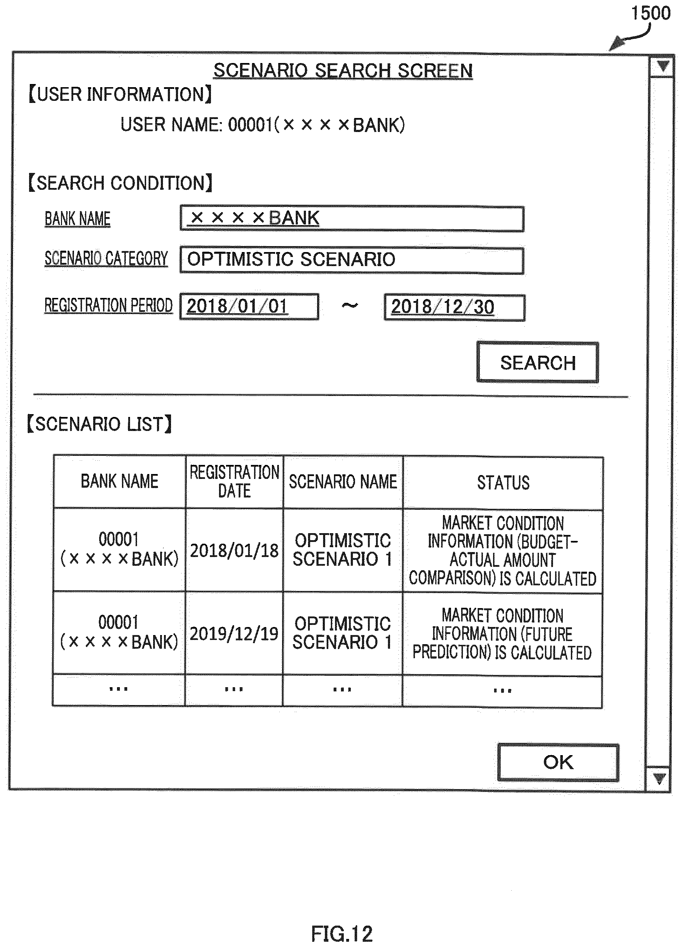

For example, as illustrated in a scenario search screen 1500 of Fig. 12, the prediction task assistance apparatus 100 receives specification of conditions of bank name, scenario category, and registration period for scenarios desired by the person in charge and executes searching of the answer management information 129 based on this specification. Then, the prediction task assistance apparatus 100 can determine the records including keywords such as "optimistic" or "pessimistic" indicating the scenario category in the scenario names. The records determined herein are displayed in the scenario search screen 1500 as "list of scenarios".

Assume that the person in charge operating the user terminal 200 views the scenario search screen 1500 and selects a scenario whose detail information he/she wants to check from the aforementioned "list of scenarios". Then, the prediction task assistance apparatus 100 obtains information on the selected scenario from the answer management information 129, generates a scenario reference screen 1600 including this information, and returns the scenario reference screen 1600 to the user terminal 200.

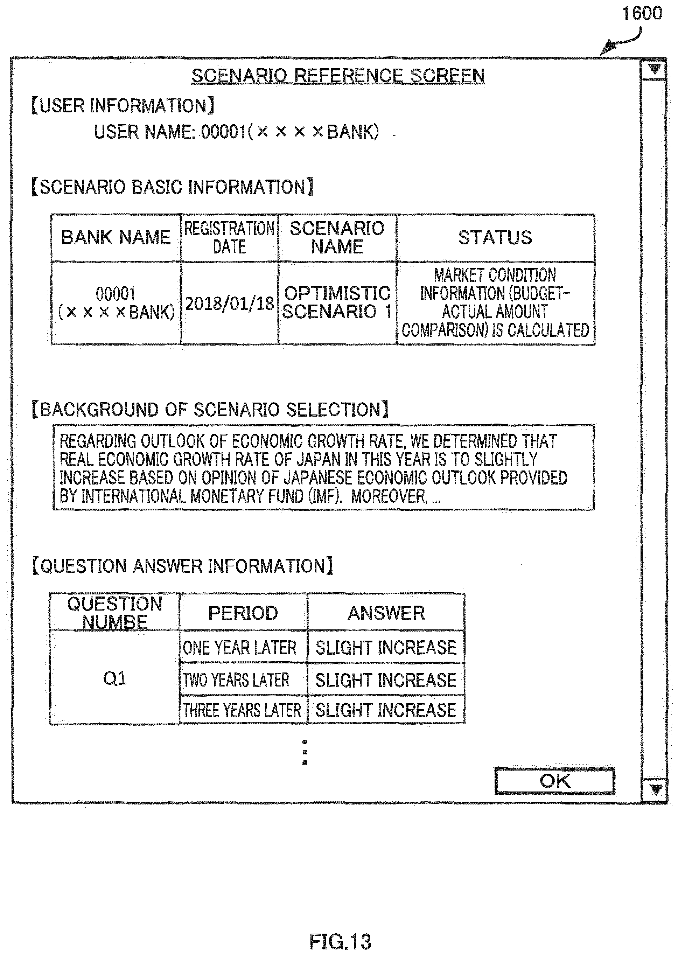

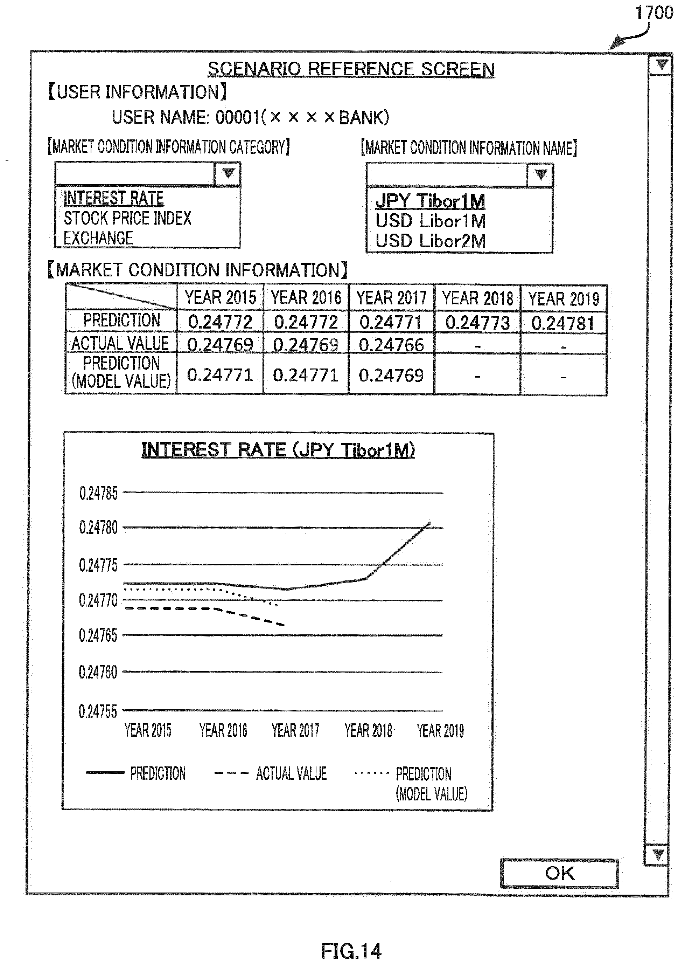

As illustrated in Fig. 13, the scenario reference screen 1600 includes scenario basic information, scenario selection background, and information on answers to questions. Moreover, when the prediction task assistance apparatus 100 receives a predetermined operation on the scenario reference screen 1600, the prediction task assistance apparatus 100 switches the screen to a scenario reference screen 1700 illustrated in Fig. 14 and displays market condition information category, market condition information, and a graph of this information in the scenario reference screen 1700. These pieces of information are obtained from the answer management information 129.

According to the aforementioned configuration, it is possible to search and check information such as trend determination of economic indices and the like in the other financial institutions that has been conventionally difficult to know. Each financial institution can perform such operations of searching and checking the determination made by the other financial institutions, specifically, the aforementioned information and the like can be shared among the financial institutions. From the viewpoint of the person in charge of the aforementioned ALM task, such a configuration can have a function of improving the efficiency and accuracy of tasks by referring to determination trends of the other banks to secure appropriateness of the determination of his/her bank or to finely correct the determination as appropriate. Then, the configuration can further improve the accuracy and efficiency of future prediction associated with predetermined tasks in financial institutions.

### ---Flow Example 2---

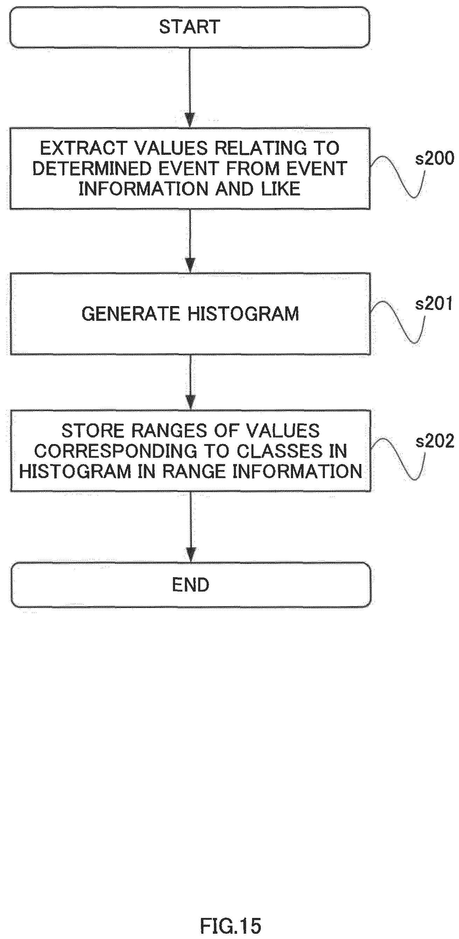

Next, processing relating to the aforementioned range information 1000 is described. Fig. 15 is a flowchart illustrating a processing step example 2 of the prediction task assistance method in the embodiment. In this section, an example of generating the aforementioned range information 1000 is described.

In the generation of the aforementioned question screen 900, the prediction task assistance apparatus 100 extracts information on the event determined in s102, specifically the values of the target event in the event information 126 and the rates of the target index value in the index value information 125 from the event information 126 and the index value information 125, as an event affecting the requested index value (s200). In this case, for example, assume that the event "economic growth rate" is determined as the event affecting the requested index value and the values of "economic growth rate" are extracted from the event information 126.

Next, the prediction task assistance apparatus 100 categorizes the values of "economic growth rate" extracted in s200 into classes according to the magnitudes of the values, depending on the number of choices in the pull-down menu 9031 of "economic growth rate" in the question screen 900 and generates a histogram 1300 indicating distribution of the values of the event "economic growth rate" (s201).

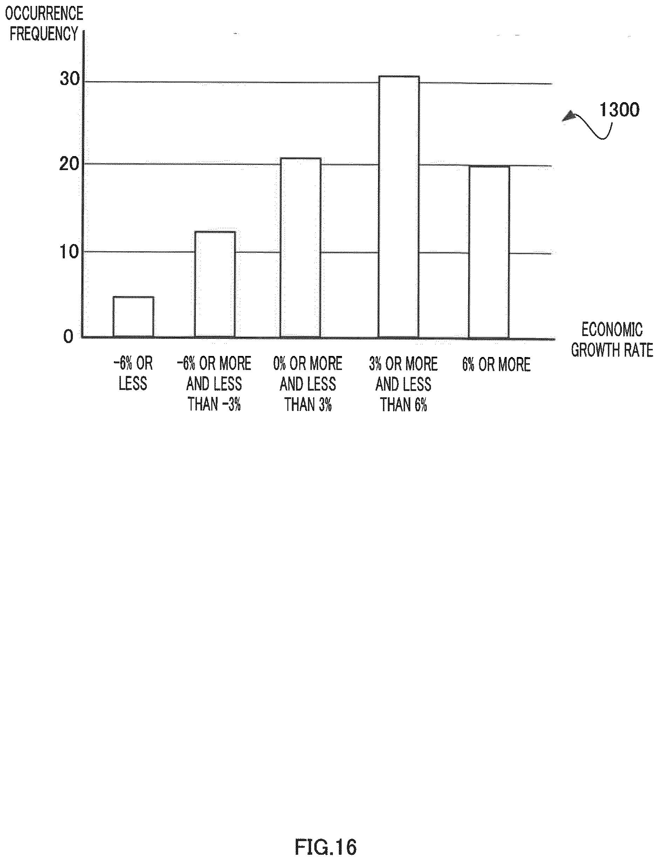

In the histogram 1300 illustrated in Fig. 16, the values of "economic growth rate" are categorized into classes in which the value of economic growth rate is "-6% or less", "-6% or more and less than -3%", " 0% or more and less than 3%", "3% or more and less than 6%", and "6% or more", according to the number of aforementioned choices that is "5", and the vertical axis of the histogram 1300 represents the occurrence frequency of the value.

The occurrence frequency is "5" for the economic growth rate of "-6% or less", "12" for the economic growth rate of "-6% or more and less than -3%", "21" for the economic growth rate of "0% or more and less than 3%", "31" for the economic growth rate of "3% or more and less than 6%", and "20" for the economic growth rate of "6% or more".

Next, the prediction task assistance apparatus 100 stores the information on the range of the value of the event "economic growth rate" for each of the classes in the histogram 1300 generated as described above in the range information 1000 in association with the corresponding choice in the pull-down menu 9031 (s202).

In this case, the prediction task assistance apparatus 100 associates the ranges of the values of the "economic growth rate" for the respective classes described above with "increase", "slight increase", "flat", "slight decrease", and "decrease" in the descending order of the values. For example, the choice "increase" is associated with "6% or more", the choice "slight increase" is associated with "3% or more and less than 6%", the choice "flat" is associated with "0% or more and 3% or less", the choice "slight decrease" is associated with "-6% or more and less than -3%", and the choice "decrease" is associated with "-6% or less".

In the generation of the question screen 900, the prediction task assistance apparatus 100 may compare the frequencies of the respective classes in the histogram 1300 and determine the classes whose frequencies are equal to or higher than a predetermined criterion. Specifically, the prediction task assistance apparatus 100 determines that a class with an excessively low occurrence frequency cannot be an effective choice in the question screen 900 and excludes this class.

In this case, the prediction task assistance apparatus 100 determines the number and contents of choices in the pull-down menu of the question screen 900 to be the number of classes determined in the aforementioned determination and the ranges of the values of the event for the respective classes.

### ---Flow Example 3---

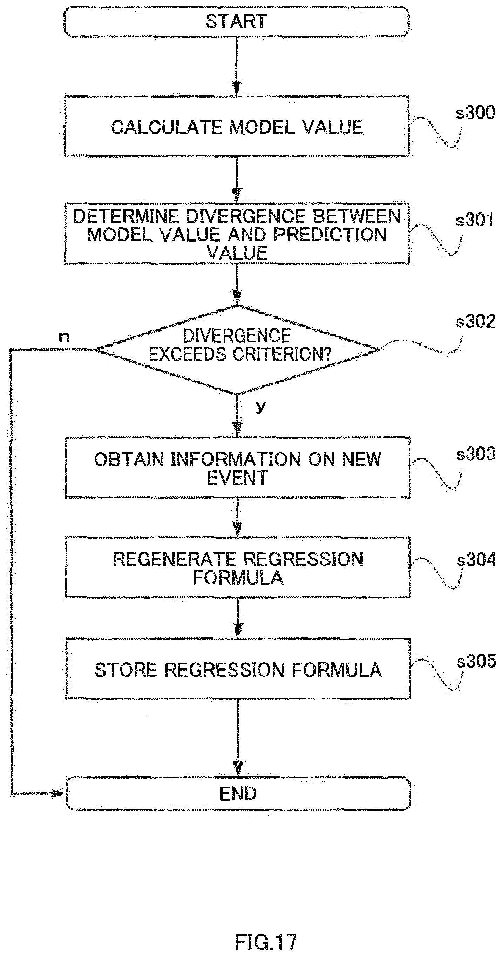

Next, processing of tuning the regression formula is described. Fig. 17 is a flowchart illustrating a processing step example 3 of the prediction task assistance method in the embodiment.

Although the prediction task assistance apparatus 100 generates the regression formula as described above, whether the accuracy of the regression formula is good from the beginning is uncertain in some cases.

Accordingly, the prediction task assistance apparatus 100 calculates a model value of the index value for the generated regression formula with an actual value of an event (event corresponding to the variable in the regression formula) in a predetermined period being set as an input (s300). The aforementioned actual value correspond to a value of an economic event such as the "economic growth rate" in the event information 126. Specifically, although having the generated the correlation formula through the correlation analysis or the like, the prediction task assistance apparatus 100 calculates the index value in the case where the actual value in the event information 126 (value converted to "1" or "0" according to the choice of the corresponding event in the determination based on the range information 1000) is substituted into the variable, as the model value.

For example, assume that the target regression formula is interest rate y = 1.01 × X1 + 0.002 × X2 + 0.124 × X3 + 0.212 × X4 + 0.001 × X5. Moreover, assume that the actual economic growth rate in a certain year was "4%". In this case, the prediction task assistance apparatus 100 compares the actual economic growth rate "4%" with the range information 1000 and determines that this growth rate corresponds to "slight increase" among the existing choices and corresponds to the variable "X2". Then, the prediction task assistance apparatus 100 substitutes "1" into the variable "X2" in the aforementioned regression formula and calculates interest rate y = 0.002×1 = 0.002, that is 2% as the model value.

Then, the prediction task assistance apparatus 100 compares the calculated model value with the prediction value calculated in s107 and determines whether the divergence between the two values exceeds a predetermined criterion (s301).

For example, assume that the prediction value is "1.8%", the model value is "2%", and the criterion value of divergence is "1.5%". In this case, the prediction task assistance apparatus 100 can determine that the divergence between the prediction value and the model value is "0.2%" and does not exceed the criterion value of divergence "1.5%".

When the divergence does not exceed the predetermined criterion in the result of the aforementioned determination (s302: n), the prediction task assistance apparatus 100 terminates the processing.

Meanwhile, when the divergence exceeds the predetermined criterion in the result of the aforementioned determination (s302: y), the prediction task assistance apparatus 100 obtains information on a new event not used for the generation of the target regression formula from the input device 105 or the storage device 101 (s303).

For example, when the information given to the correlation analysis engine 110 as an input in the correlation analysis of the target regression formula is the value of "economic growth rate", the prediction task assistance apparatus 100 obtains the value of "presence or absence of economic turmoil" from the event information 126 of the storage device 101.

Then, the prediction task assistance apparatus 100 regenerates the regression formula while using the information on the new event obtained in s303 as the input of the correlation analysis engine 110 in addition to the originally-employed event information ("economic growth rate" in the case of the aforementioned example) (s304). The contents of correlation analysis are the same as those in s102.

Moreover, the prediction task assistance apparatus 100 stores the regression formula regenerated in s304 in the regression formula information 127 (s305) and terminates the processing.

The prediction task assistance apparatus 100 repeats the processing of s300 to s305 described above every predetermined period to perform measurement while constantly tuning the regression formula and improving the accuracy of the regression formula.

The regression formula tuned as described above is used for processing such as the generation of the question screen and the calculation of the prediction value based on the values of the answers of trend prediction as in the flow example 1 and leads presentation of a highly-accurate result to the person in charge.

Although the embodiment has been described assuming that the events to be processed by the prediction task assistance apparatus 100 are events relating to the ALM task, the types of events are not limited to these.

For example, the prediction task assistance method of the embodiment is assumable to be applied to events such as real estate loans, corporate loans, and deposit balance.

For example, in the case of real estate loans, a loan closing rate or a loan balance is assumable as the index value and events such as a long-term interest rate, a short-term interest rate, a roadside land price, and an average income are assumable as the events affecting the index value. In the case of corporate loan, a loan closing rate or a loan balance are assumable as the index value and events such as a long-term interest rate, a short-term interest rate, a corporate tax rate, and a corporate sales are assumable as the events affecting the index value. In the case of deposit balance, a deposit balance or a time deposit acquiring rate is assumable as the index value and events such as a long-term interest rate, a short-term interest rate, a personal income, and a corporation sales are assumable as the events affecting the index value.

The prediction task assistance apparatus of the embodiment can improve the accuracy and efficiency of the future prediction associated with predetermined tasks in financial institutions.

At least the following matters are apparent from the statements in this description. Specifically, in the generation of the question screen, the computation device may further perform processing of generating a histogram by categorizing the pieces of information on the determined event according to magnitudes of the values of the determined event, depending the number of selectable choices in the interface, and holding range information on ranges of the values of the predetermined event in the storage device in association with the choices, the ranges corresponding respectively to classes in the histogram, and in the processing of generating the regression formula, the computation device may compare each of the pieces of information on the event determined to give the predetermined effect with the range information and determine one of the choices corresponding to the piece of information to convert the piece of information on the event to a value of the one of the choices and obtain a converted value, give the obtained converted value and the index value to a predetermined machine learning algorithm, and generate the regression formula by determining a combination of a variable and a coefficient of the variable in the regression formula.

According to this configuration, it is possible to convert a value such as the economic growth rate used in the generation of the regression formula to a choice in the question screen, that is a value to be substituted into a corresponding variable in the regression formula and give the converted value to a machine learning algorithm. Thus, a simple regression formula directly corresponding to choices in a question screen can be efficiently generated. Then, the accuracy and efficiency of the future prediction associated with predetermined tasks in financial institutions can be further improved.

In the prediction task assistance apparatus of the embodiment, the computation device may perform processing of calculating a model value of the index value by setting a value of one of the choices, obtained by comparing an actual value of the event in a predetermined period with the range information and converting the actual value, as an input to the variable in the regression formula, comparing the model value and the prediction value, and, when a divergence between the model value and the prediction value exceeds a predetermined criterion, obtaining information on a new predetermined event that is not used for the generation of the regression formula from an input device or the storage device, and regenerating the regression formula while adding the information on the new event, processing of generating a question screen including an interface that allows giving an answer to a selective type question on trend prediction of the event configuring a variable in the regenerated regression formula, processing of distributing the question screen to the terminals of predetermined financial institution, obtaining answers of the trend prediction from the terminals via the question screen, inputting values of the answers into the variable of the event corresponding to the answers in the regression formula, and calculating a prediction value of the index value, and processing of outputting information on the prediction value to the predetermined device of the predetermined financial institution.

According to this configuration, it is possible to regenerate the regression formula in such a way that the divergence between the prediction value and the model value is eliminated and gradually improve the accuracy of the regression formula, that is the accuracy of the prediction value. Then, the accuracy and efficiency of the future prediction associated with predetermined tasks in financial institutions can be further improved.

In the prediction task assistance apparatus of the embodiment, in the generation of the question screen, the computation device may compare frequencies of the respective classes, determine the classes whose frequencies are equal to or higher than a predetermined criterion, set the number and contents of the choices to the number of the classes determined to have frequencies equal to or higher than a predetermined criterion and the ranges of the values of the predetermined event in the respective classes, and generate the question screen including the interface depending on the set number and contents of the choices.

According to this configuration, it is possible to remove, for example, a range of values that substantially do not appear among ranges of values of an event such as an economic growth rate or a discount rate, set classes by defining ranges of values that appear in appropriate frequencies, and use the classes as bases of choices. Then, the accuracy and efficiency of the future prediction associated with predetermined tasks in financial institutions can be further improved.

In the prediction task assistance apparatus of the embodiment, the computation device may further perform processing of receiving an information presentation request relating to another financial institution different from the predetermined financial institution from any of the terminals of the predetermined financial institution and outputting at least one of pieces of information on the values of the answers of the trend prediction and the calculated prediction value of the index value that have been already obtained from the other financial institution, to the terminal of the other financial institution.

According to this configuration, it is possible to search for and check information such as trend determination of economic indices and the like in the other financial institutions that has been conventionally difficult to know. In other words, the aforementioned information and the like can be shared among the financial institutions. From the viewpoint of the person in charge of the ALM task, this configuration can improve the efficiency and accuracy of the tasks by allowing the person to refer to the determination trends of the other banks and secure appropriateness of the determination of his/her bank or finely correct the determination as appropriate. Then, the accuracy and efficiency of the future prediction associated with predetermined tasks in financial institutions can be further improved.

In the prediction task assistance method of the embodiment, in the generation of the question screen, the information processing apparatus may further perform processing of generating a histogram by categorizing the pieces of information on the determined event according to magnitudes of the values of the determined event, depending the number of selectable choices in the interface, and holding range information on ranges of the values of the predetermined event in the storage device in association with the choices, the ranges corresponding respectively to classes in the histogram, and in the processing of generating the regression formula, the information processing apparatus may compare each of the pieces of information on the event determined to give the predetermined effect with the range information and determine one of the choices corresponding to the piece of information to convert the piece of information on the event to a value of the one of the choices and obtain a converted value, give the obtained converted value and the index value to a predetermined machine learning algorithm, and generate the regression formula by determining a combination of a variable and a coefficient of the variable in the regression formula.

In the prediction task assistance method of the embodiment, the information processing apparatus may perform processing of calculating a model value of the index value by setting a value of one of the choices, obtained by comparing an actual value of the event in a predetermined period with the range information and converting the actual value, as an input to the variable in the regression formula, comparing the model value and the prediction value, and, when a divergence between the model value and the prediction value exceeds a predetermined criterion, obtaining information on a new predetermined event that is not used for the generation of the regression formula from an input device or the storage device, and regenerating the regression formula while adding the information on the new event, processing of generating a question screen including an interface that allows giving an answer to a selective type question on trend prediction of the event configuring a variable in the regenerated regression formula, processing of distributing the question screen to the terminals of predetermined financial institution, obtaining answers of the trend prediction from the terminals via the question screen, inputting values of the answers into the variable of the event corresponding to the answers in the regression formula, and calculating a prediction value of the index value, and processing of outputting information on the prediction value to the predetermined device of the predetermined financial institution.

In the prediction task assistance method of the embodiment, in the generation of the question screen, the information processing apparatus may compare frequencies of the respective classes, determine the classes whose frequencies are equal to or higher than a predetermined criterion, set the number and contents of the choices to the number of the classes determined to have frequencies equal to or higher than a predetermined criterion and the ranges of the values of the predetermined event in the respective classes, and generate the question screen including the interface depending on the set number and contents of the choices.

In the prediction task assistance method of the embodiment, the information processing apparatus may further perform processing of receiving an information presentation request relating to another financial institution different from the predetermined financial institution from any of the terminals of the predetermined financial institution and outputting at least one of pieces of information on the values of the answers of the trend prediction and the calculated prediction value of the index value that have been already obtained from the other financial institution, to the terminal of the other financial institution.

### [Reference Signs List]

- 10: network
- 100: prediction task assistance apparatus
- 101: storage device
- 102: program
- 103: memory
- 104: CPU (computation device)
- 105: communication device
- 110: correlation analysis engine
- 125: index value information
- 125A: market condition information (interest rate)
- 125B: market condition information (stock index)
- 125C: market condition information (exchange rate)
- 126: event information
- 127: regression formula information
- 128: question management information
- 129: answer management information
- 130: analyst report
- 131: predicted index value information
- 131A: predicted market condition information (interest rate)
- 131B: predicted market condition information (stock index)
- 131C: predicted market condition information (exchange rate)
- 200: user terminal
- 300: information distribution server
- 1000: range information

## Claims

1. A prediction task assistance apparatus, comprising:
a storage device that stores a piece of information on a predetermined index value and pieces of information on predetermined events used in a financial institution; and
a computation device that performs
processing of reading the pieces of information on the index value and the events from the storage device, executing correlation analysis between the piece of information on the index value and the pieces of information on the events by using the read pieces of information as inputs, determining the event that gives a predetermined effect on the index value, and generating a regression formula used to estimate the index value based on the pieces of information on the determined event,
processing of generating a question screen including an interface that allows giving an answer to a selective type question on trend prediction of the event configuring a variable in the regression formula,
processing of distributing the question screen to terminals of a predetermined financial institution, obtaining answers of the trend prediction from the terminals via the question screen, inputting values of the answers into the variable of the event corresponding to the answers in the regression formula, and calculating a prediction value of the index value, and
processing of outputting information on the prediction value to a predetermined device of the predetermined financial institution.

2. The prediction task assistance apparatus according to claim 1, wherein
in the generation of the question screen, the computation device further performs processing of generating a histogram by categorizing the pieces of information on the determined event according to magnitudes of the values of the determined event, depending on the number of selectable choices in the interface, and holding range information on ranges of the values of the predetermined event in the storage device in association with the choices, the ranges corresponding respectively to classes in the histogram, and
in the processing of generating the regression formula, the computation device compares each of the pieces of information on the event determined to give the predetermined effect with the range information and determines one of the choices corresponding to the piece of information to convert the piece of information on the event to a value of the one of the choices and obtain a converted value, gives the obtained converted value and the index value to a predetermined machine learning algorithm, and generates the regression formula by determining a combination of a variable and a coefficient of the variable in the regression formula.

3. The prediction task assistance apparatus according to claim 2, wherein the computation device performs
processing of calculating a model value of the index value by setting a value of one of the choices, obtained by comparing an actual value of the event in a predetermined period with the range information and converting the actual value, as an input to the variable in the regression formula, comparing the model value and the prediction value, and, when a divergence between the model value and the prediction value exceeds a predetermined criterion, obtaining information on a new predetermined event that is not used for the generation of the regression formula from an input device or the storage device, and regenerating the regression formula while adding the information on the new event,
processing of generating a question screen including an interface that allows giving an answer to a selective type question on trend prediction of the event configuring a variable in the regenerated regression formula,
processing of distributing the question screen to the terminals of predetermined financial institution, obtaining answers of the trend prediction from the terminals via the question screen, inputting values of the answers into the variable of the event corresponding to the answers in the regression formula, and calculating a prediction value of the index value, and
processing of outputting information on the prediction value to the predetermined device of the predetermined financial institution.

4. The prediction task assistance apparatus according to claim 2, wherein, in the generation of the question screen, the computation device compares frequencies of the respective classes, determines the classes whose frequencies are equal to or higher than a predetermined criterion, sets the number and contents of the choices to the number of the classes determined to have frequencies equal to or higher than a predetermined criterion and the ranges of the values of the predetermined event in the respective classes, and generates the question screen including the interface depending on the set number and contents of the choices.

5. The prediction task assistance apparatus according to claim 1, wherein the computation device further performs processing of receiving an information presentation request relating to another financial institution different from the predetermined financial institution from any of the terminals of the predetermined financial institution and outputting at least one of pieces of information on the values of the answers of the trend prediction and the calculated prediction value of the index value that have been already obtained from the other financial institution, to the terminal of the other financial institution.

6. A prediction task assistance method comprising causing an information processing apparatus, including a storage device that stores a piece of information on a predetermined index value and pieces of information on predetermined events used in a financial institution, to perform:
processing of reading the pieces of information on the index value and the events from the storage device, executing correlation analysis between the piece of information on the index value and the pieces of information on the events by using the read pieces of information as inputs, determining the event that gives a predetermined effect on the index value, and generating a regression formula used to estimate the index value based on the pieces of information on the determined event,
processing of generating a question screen including an interface that allows giving an answer to a selective type question on trend prediction of the event configuring a variable in the regression formula,
processing of distributing the question screen to terminals of a predetermined financial institution, obtaining answers of the trend prediction from the terminals via the question screen, inputting values of the answers into the variable of the event corresponding to the answers in the regression formula, and calculating a prediction value of the index value, and
processing of outputting information on the prediction value to a predetermined device of the predetermined financial institution.

7. The prediction task assistance method according to claim 6, wherein
in the generation of the question screen, the information processing apparatus further performs processing of generating a histogram by categorizing the pieces of information on the determined event according to magnitudes of the values of the determined event, depending on the number of selectable choices in the interface, and holding range information on ranges of the values of the predetermined event in the storage device in association with the choices, the ranges corresponding respectively to classes in the histogram, and
in the processing of generating the regression formula, the information processing apparatus compares each of the pieces of information on the event determined to give the predetermined effect with the range information and determines one of the choices corresponding to the piece of information to convert the piece of information on the event to a value of the one of the choices and obtain a converted value, gives the obtained converted value and the index value to a predetermined machine learning algorithm, and generates the regression formula by determining a combination of a variable and a coefficient of the variable in the regression formula.

8. The prediction task assistance method according to claim 7, wherein the information processing apparatus performs
processing of calculating a model value of the index value by setting a value of one of the choices, obtained by comparing an actual value of the event in a predetermined period with the range information and converting the actual value, as an input to the variable in the regression formula, comparing the model value and the prediction value, and, when a divergence between the model value and the prediction value exceeds a predetermined criterion, obtaining information on a new predetermined event that is not used for the generation of the regression formula from an input device or the storage device, and regenerating the regression formula while adding the information on the new event,
processing of generating a question screen including an interface that allows giving an answer to a selective type question on trend prediction of the event configuring a variable in the regenerated regression formula,
processing of distributing the question screen to the terminals of predetermined financial institution, obtaining answers of the trend prediction from the terminals via the question screen, inputting values of the answers into the variable of the event corresponding to the answers in the regression formula, and calculating a prediction value of the index value, and
processing of outputting information on the prediction value to the predetermined device of the predetermined financial institution.

9. The prediction task assistance method according to claim 7, wherein, in the generation of the question screen, the information processing apparatus compares frequencies of the respective classes, determines the classes whose frequencies are equal to or higher than a predetermined criterion, sets the number and contents of the choices to the number of the classes determined to have frequencies equal to or higher than a predetermined criterion and the ranges of the values of the predetermined event in the respective classes, and generates the question screen including the interface depending on the set number and contents of the choices.

10. The prediction task assistance method according to claim 6, wherein the information processing apparatus further performs processing of receiving an information presentation request relating to another financial institution different from the predetermined financial institution from any of the terminals of the predetermined financial institution and outputting at least one of pieces of information on the values of the answers of the trend prediction and the calculated prediction value of the index value that have been already obtained from the other financial institution, to the terminal of the other financial institution.
